# EUROPEAN PATENT APPLICATION

(11) **EP 0 858 043 A2**
(43) Date of publication of application: **12.08.1998**
(21) Application number: 98650008.0
(22) Date of filing: 03.02.1998
(51) Int. Cl.: G06F 17/50

(54) **Computerised modelling**

(30) Priority: 05.02.1997 IE 970071
(71) Applicant: Cunav Innovations Limited, Dublin 2 (IE)
(72) Inventor: Lambe, Canice, Dublin 6 (IE); McGann, Conor, Monkstown, County Dublin (IE)
(74) Representative: Weldon, Michael James

(57) **Abstract**

A computerised modelling system (30) has an interface (31) which is used to create a problem domain by inputting data attributes to instantiate operational objects (32) and store them in an object store (35). A problem is solved by instantiating a solution object (36) from a class which is hard-coded for problem solving. Success of problem solving is indicated if the solution object (36) is committed by being written to the object store (35). The problem solving processing is carried out by a setup constraint (37) of the solution object. The setup constraint (37) instructs constraint methods of the operational objects (32) to interact with linked operational objects and output True or False outputs. A False output causes automatic rollback and there is therefore atomic processing.

## Description

The invention relates to computerised modelling of real situations for problem solving.

There are many environments for which computerised modelling would be of huge benefit in solving control problems as they arise. Generally, there are tasks. resources allocated to tasks and constraints on those resources. The problems may be time-based such as scheduling and planning, or they may not be time-based in which case they are often referred to as configuration problems. An example of a scheduling problem is movement of aeroplanes in an airport, in which the aeroplanes have different wingspans and the docking areas have different attributes. A simpler example is loading of cargo onto a fleet of trucks, the cargo being in loads of different sizes and weights, and the trucks have different capacities. Other examples are maintenance of a production plant in which production and machine requirements must be matched with available human and technical resources for both preventative and repair maintenance.

Generally, computerised modelling for problem solving would be of benefit to any environment in which scheduling, planning, or configuration problems arise. Such environments give rise to complex situations and despite the increasing power of computer processors, a major challenge is to avoid long response times and data corruption.

In the art, US5369732 (Triolgy) describes a method of managing goal processing in which search states are maintained. Goals are represented as objects and alternative sub-goals are generated upon failure. A set of goals are inputted in the beginning. While this system is apparently effective in some situations, there are many situations in which the goal is simple but the problem domain is complex. US5515524 (Trilogy) describes a system in which requests or needs are inputted and the system determines resource and component needs and associated constraints. Therefore, this system is akin to a design system because it generates requirements, rather than a modelling system which models an actual system.

The invention is therefore directed towards providing a method for developing a computerised model, and a method of operation of a computer model which allow modelling of complex situations with a fast response time to achieve a goal.

Another object is to allow simpler user input to the system to begin modelling.

A still further object is to provide a modelling method which provides excellent data integrity when modelling complex environments.

According to the invention, there is provided a computer modelling method implemented by a computer processor connected to a memory and comprising the steps of:-
creating a problem domain in memory by instantiating operational objects corresponding to problem entities, the operational objects having constraint methods which cause interaction with other operational objects for problem solving;
invoking a setup constraint of a solution object;
the solution object setup constraint activating selected source operational objects in the problem domain to operate according to their constraint methods for problem solving;
the solution object setup constraint monitoring outputs of all of the activated source operational objects to determine if solution is reached; and
if a solution is reached, committing the solution object.

This allows the user to establish the problem domain in a simple manner, and efficient processor operation within this domain. Processing is distributed around the operational objects, and problem solving is carried out as a process for committing a solution object.

An important aspect of the invention is that a goal is not inputted by the user - he or she simply creates a problem domain and activates the solution object. This then automatically interacts with the problem domain until it is committed. There is no need to manage multiple goals or to ensure that they are correctly configured. The inputs required from the user are for creation of the problem domain using operational objects. This task is relatively simple as the operational objects relate directly in a logical real-world fashion with the entities of the modelled environment.

In one embodiment, the problem domain is defined by writing the instantiated operational objects to an object store in memory, the object store being associated with the problem domain. This provides a memory area directly associated with the current problem, thus allowing simple problem solving.

Preferably, the solution object is committed by being written to the object store. Thus, both the problem and the solution indicator are located in the one area of memory, allowing direct correlation between memory and a particular modelling session.

In one embodiment, the solution object setup constraint by default automatically calls only objects in the object store to restrict operation to the problem domain. This allows efficient problem solving.

In another embodiment, commands of the constraint methods and the setup constraint are atomic in which the processor proceeds according to the next command if the previous command output is true, and rolls back by reversing direction of execution if the output is false. This is a very important feature as it ensures data integrity by automatic correction in a distributed manner at each operational object.

Preferably, the operational objects maintain registers of changes made by constraint methods. Again, this allows efficient distribution of processing.

In one embodiment, the operational objects maintain registers of changes made by the constraint methods, the registers including a stack indicating changes made to linked objects and a neighbourhood link list of linked object addresses.

Preferably, the operational objects maintain registers of changes made by the constraint methods, the registers including a stack indicating changes made to linked objects and a neighbourhood link list of linked object addresses, and wherein rollback includes the steps of deleting entries which have been made according to the current command. This allows fast rollback with flexibility.

Preferably, the operational objects maintain registers of changes made by constraint methods, and wherein the registers are stored in the object store. In one embodiment, the operational objects maintain registers of changes made by constraint methods, and wherein the registers are stored in the object store, and wherein there is a set of registers associated with each operational object in a one-to-one relationship. This maintains all relevant modelling data in the one memory section and allows fast updating. Further the one-to-one relationship allows excellent tracking of problem solving.

In one embodiment, commands of the constraint methods and the setup constraint are atomic in which the processor proceeds according to the next command if the previous command output is true, and rolls back by reversing direction of execution if the output is false, and both source and linked objects maintain registers for bi-directional monitoring. This allows very early detection of incompatible results and so there is efficient and quick rollback for data integrity.

Preferably. the constraint methods cause a trace output to a file according to set conditions. and preferably the conditions include direction of execution. These features allow comprehensive tracing of processor execution.

In one embodiment, the constraint methods cause a trace output to a file according to set conditions, and the conditions include a trace level which is compared with a preset limit. This allows flexible setting of the level of trace output for a particular problem. Preferably, the processor updates a profile file upon occurrence of major actions in operation of programs including activation of the programs and success or failure after activation.

The invention will be more clearly understood from the following description of some embodiments thereof, given by way of example only with reference to the accompanying drawings in which:-
Fig. 1 is a flow chart illustrating initialisation of a modelling system,
Fig. 2 is a flow chart illustrating operation of the modelling system for problem solving,
Fig. 3 is a schematic representation of the modelling system in use, and
Fig. 4 is a flow chart illustrating problem-solving steps implemented by the system in more detail.

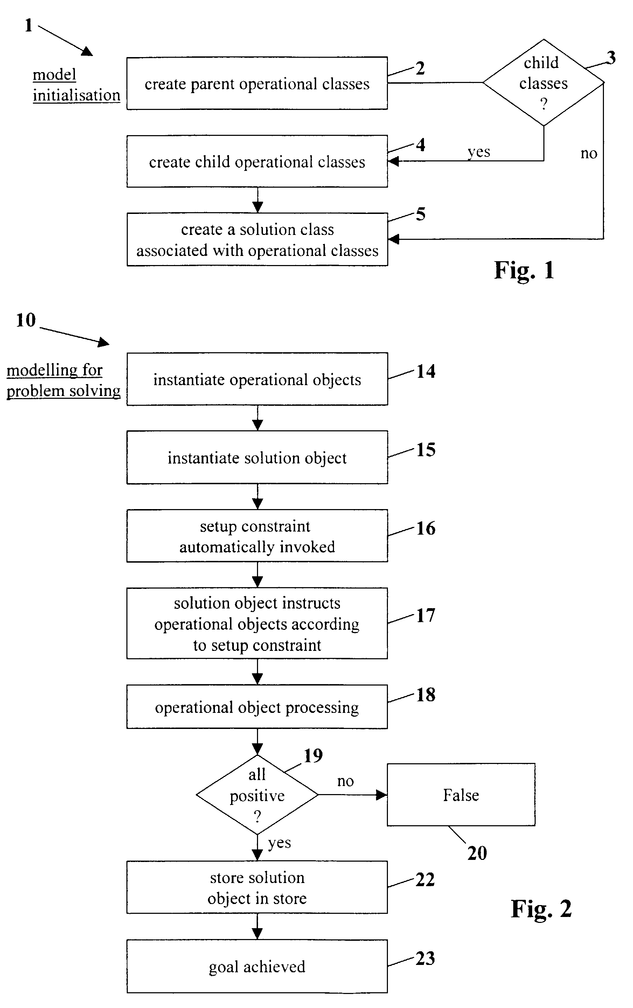

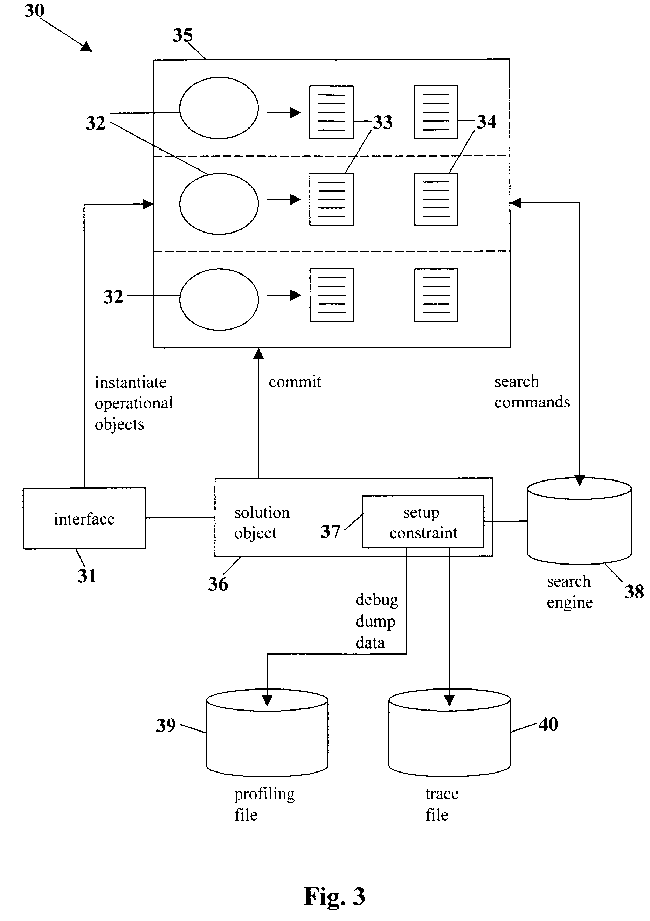

Referring to the drawings, and initially to Fig. 1 there is shown a modelling system initialisation method 1 having steps 2 to 5 inclusive. Fig. 2 shows a modelling method 10 having steps 14 to 23. The modelling method 10 is carried out using a modelling system 30, shown in Fig. 3.

In step 2, the system 30 creates object-orientated parent operational classes. The term "operational classes˝ means classes which are used to instantiate objects which represent entities in the problem domain. In a simple example of transporting cargo on trucks, a parent operational class may be a vehicle. Each class has one or more attributes and/or one or more constraint methods which limit the way in which the object may be used. Each attribute is an item of data, such as a load weight for a cargo load class. Each constraint method allows objects created from the class to interact with other objects created during problem solving. For a cargo load class, a constraint method may identify a truck which has sufficient capacity to carry that load, for example.

In step 4, child operational classes are created if required and as indicated by the decision step 3. A child class is a more specialised version of a parent class and it inherits all of the parent classes attributes and constraints. In the cargo load/vehicle example, a child operational class may be truck, a lorry, or a forklift truck etc. These are child classes to the vehicle parent operational class.

In step 5, a solution class associated with the operational classes is created. The solution class is to be used subsequently to instantiate objects which do not represent entities in the problem domain. Instead, it is used to interact with operational objects to solve a problem. It uses features of the object-orientated methodology for interaction of objects representing entities in the problem domain. Therefore the solution object has a specific purpose of general interaction for problem solving. This is described in more detail below. The solution class usually includes attributes, and must include a setup constraint. The setup constraint is hard-coded to access an object store and to interact with all operational objects in that store for problem solving. It includes statements to cause it to interact with the operational objects in the store to solve a problem. Each solution class is specific to a particular type of problem.

Referring now to Fig. 2, the method 10 for modelling to solve a problem is illustrated. Step 14 is very important as it involves the user inputting the problem domain by instantiating operational objects from the operational classes by inputting attributes for these classes. In the simple cargo load/vehicle example, operational classes for trucks and cargo loads are instantiated so that there is an operational object for each load and for each truck to define the problem domain. A constraint method of each operational object allows it to interact with other objects to perform localised problem solving. The following is an example of a constraint method, *GetTruck* for a load operational object.

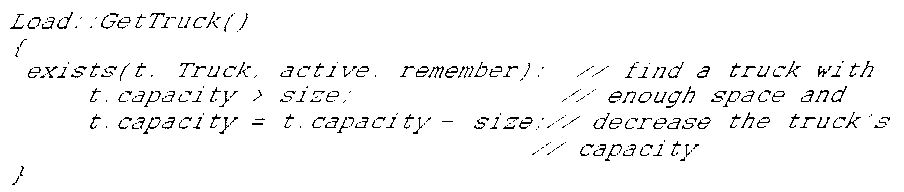

In this example, comments begin with '//' and the "exists" statement searches all of the truck operational objects for a truck t and maintains a bi-directional link (using the "remember" keyword) with that truck object. The second statement ensures that the truck t has sufficient remaining capacity to carry the load. If this output is negative, then the constraint method does not proceed with the next statement which would decrease the available capacity of the truck t. The processor then returns to the exists statement to identify another candidate truck t until one is found which has sufficient capacity. The load object will eventually output either a True or a False flag depending on whether or not the constraint method *GetTruck* succeeds in identifying a truck with the necessary capacity. Thus, the output is totally atomic.

When the operational objects are instantiated in step 14, they are stored in an object store. Subsequently, when they operate according to the constraint method illustrated above, they use registers with which they are associated in a one-to-one relationship and which are also stored in the object store. One such register is a stack of all changes which are made by the object. The other is a neighbourhood link list which contains the address of all objects with which it is linked. In the *GetTruck* example, the stack will include an entry indicating that the capacity of the truck t with which it is linked has been reduced by the size of the load. The neighbourhood link list includes the address of the truck t to indicate that it is linked with this particular load object. The registers are bi-directional as the linked objects have corresponding register entries. The register entries are made in real time.

The registers are very important as they are used by the system to automatically rollback if an output is false at any stage. For example, if the third line of the *GetTruck* constraint method above were in second position, then it is possible that the capacity of a truck would be reduced before it is verified that it has sufficient capacity. In this case, the stack registers of the load and truck objects would include an indication of this change, and the neighbourhood link lists would include the address of the corresponding object. Therefore, if the third statement fails because the linked truck t has insufficient capacity, then all of these entries are deleted from the registers. Thus, there is total rollback to the previous position at all levels of granularity. This example is simple and at a low level, however, the same occurs for high levels of granularity and/or more complex modelling situations which may involve entries for many operational objects.

Reference is now made to Fig. 3 which illustrates the system 30. The system 30 includes conventional hardware including a processor which executes commands of the objects and a user interface 31. The interface 31 is used with object control software for inputting attributes to instantiate operational objects using their setup constraints in step 14 to set the problem domain. These attributes are inputted to the operational classes to instantiate operational objects 32. Each operational object 32 has an associated stack register 33 and a neighbourhood link list 34, as described above. They are all written to the object store 35. The solution object is indicated by the numeral 36 and this includes a setup constraint 37. The setup constraint 37 is automatically invoked to perform problem-solving steps. As described below, when the problem has been solved, the solution object is written as indicated by the "commit" arrow to the object store 37. The setup constraint 37 uses search engine code 38 to interrogate the object store 35. A profiling file 39 and a trace file 40 receive tracing outputs, as described below. The objects of the system 30 drive program execution by a processor using disk storage and RAM memory.

Returning again to Fig. 2. the next step for problem solving is instantiating a solution object in step 15. The problem domain has been set out in step 14, and therefore to instruct the system 30 to commence problem solving before further data is needed the user simply instantiates the solution object 36. This step causes the setup constraint 37 to be automatically invoked in step 15. Thus, the solution object has an interim status between being created and being committed. When it is created, the setup constraint 37 operates automatically to determine whether or not it can be committed, committing being indicated when it is written to the object store 35. While in this interim state, the setup constraint 37 operates by executing the statements it contains to interact with the objects in the object store 35 until the problem is solved. The setup constraint is hard-coded to solve a particular type of problem, the user-defined aspect of the problem being inputted by instantiating the operational objects in step 14. The setup constraint 37 operates in step 17 with operational objects in the object store 37. It uses high-level commands related to lower-level commands in the search engine code 36. These hidden search and depth-first search commands for all operational objects of a given class.

The following is an example of a setup constraint for the simple problem domain outlined above.

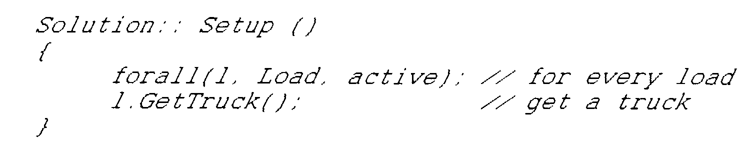

As stated above, the setup constraint is hard-coded to automatically access objects only in the object store 37. This ensures that it automatically works within the correct problem domain as these are the objects which have been instantiated by the user to define the problem domain. In this example, the setup constraint is quite simple. The "forall" statement activates each load operational object in turn in step 17 to cause each load object constraint method *GetTruck* to operate in order to identify a truck object t which can carry that load.

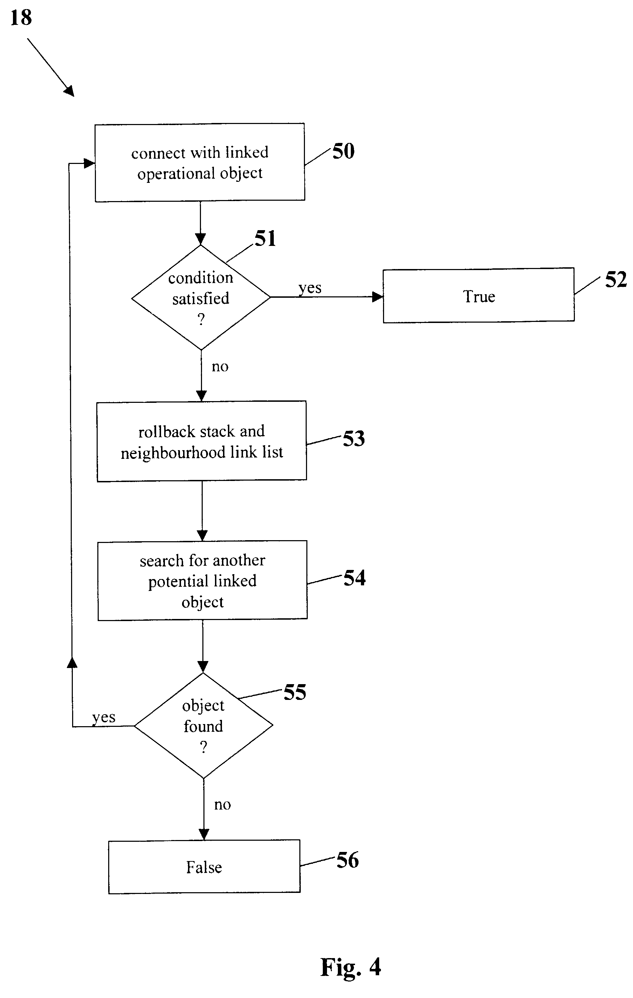

The operational object processing is indicated by the step 18 in Fig. 2 and the sub-steps are shown in detail in Fig. 4. The operational objects which are activated by the setup constraint may be referred to as "source" operational objects, and those with which they are linked as "linked" operational objects. In step 50 a source load object which is activated connects with a linked truck object. In step 51, if the truck object t has sufficient capacity and the load constraint method condition is satisfied as indicated by the step 51, a True output is generated in step 52. Thus, in the object store 35 the load object makes an entry to its stack register 33 to indicate that it has decremented the capacity of the link truck t, and an entry in the neighbourhood link list register 34 to identify the linked truck object t. Corresponding register entries are made for the linked truck object. However, if the condition is not satisfied, a False flag is generated in step 53 and the constraint method automatically performs rollback. Thus, whatever entries have been made in the registers are deleted. In one example, the capacity of the length truck t has not yet been deleted because the capacity is checked before the change is made. However, the truck t will be identified in the neighbourhood link list and this entry must be deleted. In step 54, the source object constraint method returns to the "exists" statement and identifies another potential linked truck object t. If such an object is found as indicated by the step 55, the process flow returns to the step 50. Thus, the processor operates in reverse execution once a condition is not satisfied for rollback to the next valid stage.

If there is no additional potential linked object for an "exists" or "forall" statement to cycle over, as indicated by the step 55 the source object outputs a False flag in step 56.

In step 19, the setup constraint 37 receives feedback from the source operational objects and determines if all of them have a True output. If not, then the problem will not be solved and the setup constraint must produce a False output. In this case, the source objects 32 all automatically rollback by deleting new entries they have made to their registers in step 18. On the other hand, if all of the source object outputs are True, in step 22 the setup constraint directs storage of the solution object in the object store 35. This is the final indicator that the solution has been found and is effectively an atomic True output for the whole problem. The user may then identify the solution object 36 in the object store 35 as confirmation of the solution and then interrogate the operational objects 32 to determine the solution. Thus, the problem domain has become the solution domain.

It will be seen from the above examples that both the operational objects and the solution object use "exists" and/or "forall" statements. These are very important as they allow the object to tap into the search engine code 38 to identify a new candidate object. Thus, there is rollback to the previous statement and beyond this only if no potential candidate objects exist. The "forall" statement allows an object to nest "exists" statements for a number of different objects in the one command.

In more detail, the "exists" statement causes interaction with active objects, namely those objects which are stored in the object store 35. This causes the object to automatically work with the problem domain which has been set by the user. However, it may instantiate new objects if all of the active objects fail. This extension is allowed if the qualifiers "any" or "allocate" are added. The following is an example of a constraint method for a plane operational object, the constraint method determining if the plane can be parked.

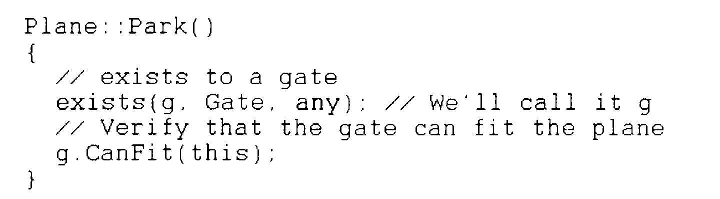

The qualifiers after the "exists" command the range of potential linked objects which may be processed. These are the gate operational objects g which are termed GATE, and the qualifier "any" allows extension to instantiate new objects if all of the active objects produce False outputs. These qualifiers are used only where resources are expandable. In the example above, the user may have defined the problem domain for a terminal building, and the "any" qualifier allows instantiation of gate objects in other terminal buildings. In many modelling situations. however, the problem domain is fixed.

The Gate objects may have width attributes of 10, 10, 20, 15, 40, 15. 40, 36, 40, and 10 respectively. In this case, the Plane object has a wingspan attribute of 28 meters, and the fifth gate object (having a width of 40 m) is the first valid candidate for which g.CanFit(this) will succeed.

An alternative to such an "exists" statement is the following.

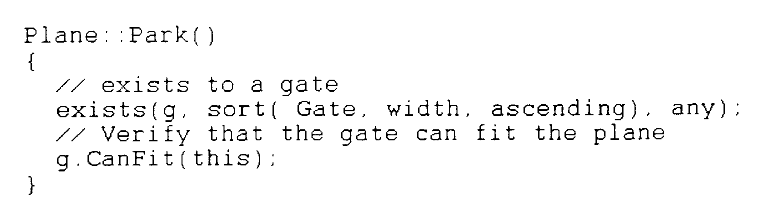

In this case, the candidate set for g becomes 10, 10, 10, 15, 15, 20, 36, 40, 40, 40 because the active objects are sorted in ascending order of width attribute initially by the "sort" command so that the gate with a minimum width first is selected on the basis that the larger gates are reserved for those aeroplanes which need them.

In addition to the "exists" and "forall" statements, the constraint methods may include "assignment" statements, Boolean expressions, "trace" statements, and "profiling" statements.

The "assignment" statements assign values to attributes for strings and numbers. Assignment of strings is relatively simple and the following are two examples.

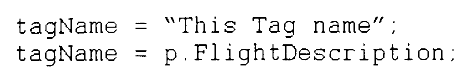

For an example of numeric attribute assignment, consider a class used for counting. It has the basic attributes of a *"start" value,* a *"delta" value* and a *"terminal" value.* The start and delta values must not exceed the terminal values. It has a function Increment. The class and its functions could be declared as:

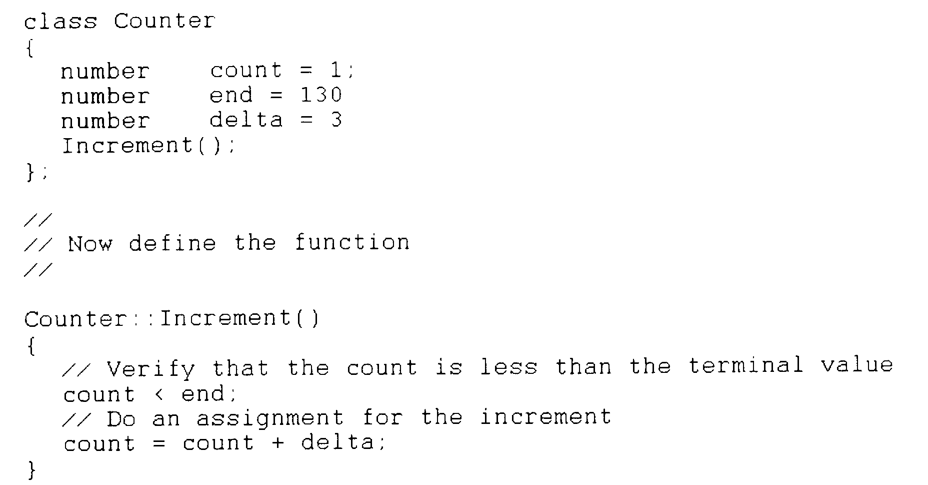

Other arithmetic operators used in calculating values in an assignment statement are +, -, ∗, /, and %. The Boolean expressions are conventional.

The "trace" statement enables output of information to text files depending on conditions. One condition is the mode of operation, an example being a False output in which the processor is performing rollback within the statement list. A trace level may be set. The following is the general configuration of a trace statement:- 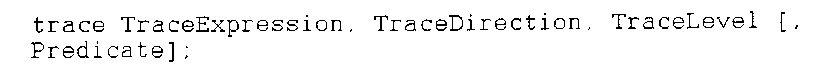 Examples are:

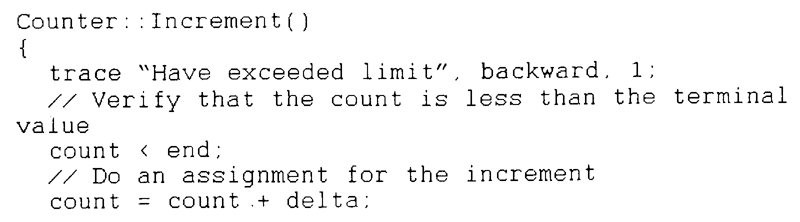

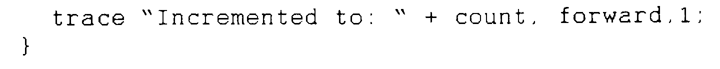

In the first example, if the TraceLevel exceeds a pre-set limit and the execution direction is reverse then the system performs rollback and activates the trace statement. It is not executed in the forward direction. If on the other hand, the system gets through to the second trace statement then it outputs a message because of the "forward" qualifier. An example of where a predicate is used is:

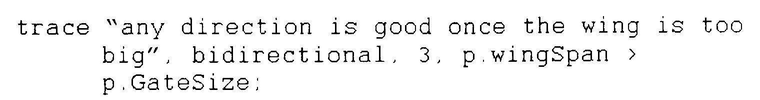

In the above example, the qualifier "bi-directional" indicates that the trace output is operational for both directions of processor execution. The predicate specifies a condition which must be satisfied for the required trace message.

An important aspect is that reverse execution begins only with a False flag, and only "exists" or "forall" statements may change it back to forward direction.

The "profiling" statement causes output to a text file every time a new method is activated. This is simply an on/off sequence indicating methods which are called and provides a record of all processing at a high level. The profiling statement is not part of code in a method itself, but is part of the underlying operating system code. The following is an example of the contents of a profiling file.

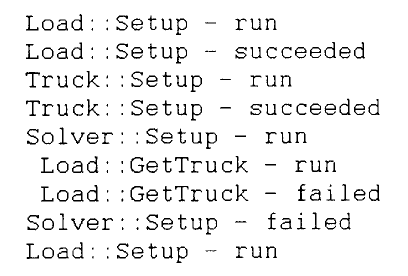

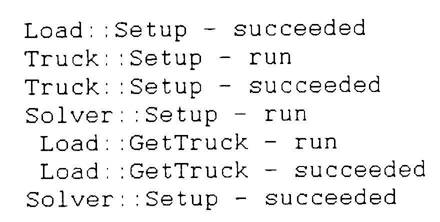

This profiling file indicates the major activities in activation of solution, load, and truck setup constraints.

The invention uses the general principle of instantiating an object as a way of very efficiently organising solution of a problem. The major advantage of the invention is its simplicity - particularly in the way the modelling is broken down to simple tasks executing in a controlled manner. Computational resources within problem domain operational objects are utilised, the solution object ensuring that the goal is achieved in an atomic manner. It is very simple for the user to input the problem domain data by instantiating the operational objects. Once this has been done, it is only necessary to activate the solution object, which has been hard-coded to solve the problem using only the domain as inputted by the user because it automatically activates operational objects in the object store. The rollback features ensure that data corruption does not arise and that the solution arrived at has full integrity. The functions which are performed by the constraint methods allow a comprehensive level of processing to be performed with traceability of code execution and of programme activation. Also, the system is flexible as it allows the user to set the problem domain in a flexible manner by allowing instantiation of any number of operational objects as are desired, and flexibility in the manner in which each object is instantiated. The user does not need to worry about how the problem is solved - only about setting the problem domain accurately.

The invention is not limited to the embodiments described but may be varied in construction and detail within the scope of the claims.

## Claims

1. A computer modelling method (10) implemented by a computer processor connected to a memory and comprising the steps of:-
creating a problem domain in the memory by instantiating (14) operational objects corresponding to problem entities, the operational objects having constraint methods which cause interaction with other operational objects for problem solving;
invoking (16) a setup constraint of a solution object (36);
the solution object setup constraint (37) activating selected source operational objects (32) in the problem domain to operate according to their constraint methods for problem solving;
the solution object setup constraint (37) monitoring outputs of all of the activated source operational objects (32) to determine if a solution is reached; and
if a solution is reached, committing the solution object (36).

2. A method as claimed in claim 1, wherein the problem domain is defined by writing the instantiated operational objects to an object store (35) in memory, the object store being associated with the problem domain.

3. A method as claimed in claims 1 or 2, wherein the solution object (36) is committed by being written to the object store (35).

4. A method as claimed in any preceding claim, wherein the solution object setup constraint (37) by default automatically calls only objects in the object store (35) to restrict operation to the problem domain.

5. A method as claimed in any preceding claim, wherein commands of the constraint methods and the setup constraint are atomic in which the processor proceeds (51) according to the next command if the previous command output is true, and rolls back by reversing direction of execution if the output is false.

6. A method as claimed in claim 5, wherein the operational objects (32) maintain registers (33, 34) of changes made by constraint methods.

7. A method as claimed in claim 6, wherein the registers include a stack (33) indicating changes made to linked objects and a neighbourhood link list (34) of linked object addresses.

8. A method as claimed in claim 7, wherein rollback includes the steps of deleting entries (53) which have been made according to the current command.

9. A method as claimed in any of claims 6 to 8, wherein the registers are stored in the object store.

10. A method as claimed in claim 9, wherein there is a set of registers (33, 34) associated with each operational object in a one-to-one relationship.

11. A method as claimed in claim 10, wherein both source and linked objects maintain registers for bi-directional monitoring.

12. A method as claimed in any preceding claim, wherein the constraint methods cause a trace output to a file according to set conditions.

13. A method as claimed in claim 12, wherein the conditions include direction of execution.

14. A method as claimed in claim 12, wherein the conditions include a trace level which is compared with a preset limit.

15. A method as claimed in any preceding claim, wherein the processor updates a profile file upon occurrence of major actions in operation of programs including activation of the programs and success or failure after activation.
